# EUROPEAN PATENT SPECIFICATION

(11) **EP 3 242 914 B1**
(45) Date of publication and mention of the grant of the patent: **26.09.2018**
(21) Application number: 16700003.3
(22) Date of filing: 04.01.2016
(51) Int. Cl.: C09D 5/00

(54) **INTUMESCENT COMPOSITION COMPRISING A SILICATE MODIFED EPOXY RESIN**
INTUMESZIERENDE ZUSAMMENSETZUNG MIT EINEM SILIKATMODIFIZIERTEN EPOXIDHARZ
COMPOSITION INTUMESCENTE COMPRENANT UNE RÉSINE ÉPOXY MODIFIÉE DE SILICATE

(30) Priority: 06.01.2015 EP 15150137
(43) Date of publication of application: 15.11.2017
(73) Proprietor: Akzo Nobel Coatings International B.V., 6824 BM Arnhem (NL)
(72) Inventor: KITTLE, Kevin Jeffrey, Chester-le-Street Durham DH2 3TL (GB); ANDERSON, Michael, Gateshead Tyne and Wear NE10 8HB (GB)
(74) Representative: Akzo Nobel IP Department
(86) International application number: PCT/EP2016/050003
(87) International publication number: WO 2016/110456

(56) References cited:
- WO-A1-98/12270
- WO-A1-02/077110
- WO-A1-2009/019296
- WO-A1-2010/054984
- WO-A1-2015/007627
- US-A- 4 160 073

## Description

The present invention relates to a novel intumescent coating composition having excellent intumescent properties, substrates coated with the intumescent coating composition, and a method of protecting structures from heat/fire.

Many materials, such as steel, rapidly lose their strength and fail in a fire, Structural collapse of "high-rise" office blocks, oil and gas facilities or other infrastructure, and process vessel or pipework rupture as a result of a fire can be catastrophic in terms of escalation of the incident, damage to property, and even loss of life.

Intumescent coatings are used on many structures to delay the effects of a fire. The coating slows the rate of temperature increase of the substrate to which the coating is applied. The coating thus increases the time before the structure fails due to the heat of fire. The extra time makes it more likely that fire fighters will be able to extinguish the fire or at least apply cooling water before the structure fails.

Intumescent coatings generally contain some form of resinous binder, for example an organic binder polymer e.g. a crosslinked polymer such as an epoxy resin or a vinyl toluene / styrene acrylic polymer. The resinous binder forms the hard coating. The binder may also provide a source of carbon, which, in a fire, may be converted to a char.

In addition, intumescent coatings typically contain additives called "spumifics" or "blowing agents" that give off gas in a fire, which causes the char to swell into a foam. Melamine, melamine pyrophosphate, and ammonium polyphosphate can be used as spumifics.

The fire-performance of these coatings is related to the formation, due to the action of heat, of porous char foam which operates as a conventional insulator to the substrate which it coats, increasing the time it takes for the coated structure to fail due to the heat of fire. An improvement in fire performance of an intumescent coating therefore results in an increase in the time it takes for the coated structure to fail due to the heat of fire.

However, in many instances, char foam from an intumescent coating does not have adequate structural strength and is easily destroyed by abrasion or erosion.

In order to improve the strength of a char foam with inadequate strength, various additives such as fibres, silicates, glass reinforcing materials may be added to the intumescent coating composition. See for instance EP 0 568 354. However, the use of such additives is understood in the art to negatively impact other properties and in particular the insulating performance of the char by suppressing char expansion. WO 2006/067478 discloses a coating composition comprising at least one of sodium potassium aluminum silicate and potassium aluminum silicate.

As a general rule, it is usually the case that intumescent coatings which produce strong and compact chars, often have poor fire performance. On the other-hand, intumescent coatings which produce highly expanded chars with good fire performance often give weak chars. There is therefore a need to provide an intumescent composition which provides both a strong foam char and also good fire performance.

One object of the present invention is therefore to provide an intumescent coating composition, which when applied and dried/cured on a substrate and then when exposed to heat (of a fire), provides both (i) a strong foam layer (to the extent that fibres in the coating or a reinforcing mesh is not necessary) and (ii) also excellent fire performance.

### Summary of the Invention

The present inventors have found that the use of a silicate modified-epoxy resin in combination with one or more spumifics, and one or more metal oxides and/or hydroxides synergistically enhances the char strength of the intumescent coating with no diminishing of the fire performance, resulting in a surprisingly superior char foam with respect to both strength and fire performance.

In this specification, the term "silicate" refers to a compound in which the silicon atoms are only bonded to oxygen atoms, not to carbon atoms.

Specifically, the intumescent coating composition of the present invention comprises
(a) the reaction product of a tetra-alkoxylorthosilicate or partially condensed oligomer thereof and an epoxy resin containing hydroxyl groups, wherein the alkoxy groups are independently selected from C₁-C₂₀ alkoxy groups,
(b) one or more spumifics, and
(c) one or more metal oxides and/or hydroxides.

When a coating which is formed from the coating composition of the present invention is exposed to heat (for example in a fire, e.g. at temperatures around 90°C and greater), the coating is pyrolysed, resulting in a strong and hard char layer with excellent thermal protection.

Surprisingly, both the fire performance and char strength of the coating formed from the coating composition of the present invention is superior compared to if a standard non-silicate modified epoxy is used instead.

The improvement in fire performance and char strength of the coating formed from the coating composition of the present invention is seen as a result of the combination of the metal oxide/hydroxide with the silicate modified-epoxy resin. Consequently removal of the metal oxide/hydroxide from a composition containing the silicate-modified epoxy resin, or substitution of the silicate-modified epoxy resin with an epoxy resin with no silicate modification, results in a substantial reduction in the fire performance and char strength.

Preferably the total weight % of the one or more metal oxides and hydroxides in the coating composition does not exceed 10.0 weight %. More preferably, the total weight % of the one or more metal oxides and hydroxides in the coating composition does not exceed 5.0 weight %. Unless otherwise stated herein, all weight % (wt%) values stated herein are calculated on the total weight of the non-volatile components in the coating composition.

The inventors have seen that if the amount of metal oxide/hydroxide in the coating composition is less than 10.0wt%, preferably less than 5.0 wt%, even more preferably less than 3.0 wt%, the fire performance and char strength of the coating is better than if the amount of metal oxides/hydroxides in the composition is greater.

The Non-Volatile Content (NVC), and hence the the total weight of the non-volatile components in the coating composition, can be determined by placing a known weight (e.g. 0.3g) of coating composition into a pre-weighed aluminum dish and heating the sample in an oven at 105°C for 30 minutes and reweighing the dish. The non-volatile content can be calculated from the difference in weight between the pre-heated and post-heated sample (ASTM D2697).

The intumescent coating composition may comprise a further metal alkoxide, such as a further tetra-alkoxylorthosilicate or partially condensed oligomer thereof. If the coating compostion comprises further tetra-alkoxylorthosilicate or partially condensed oligomer thereof, it may be present up to 10.0 wt%. The intumescent coating composition may therefore further comprise up to 10.0 wt%, or up to 5.0 wt% of a tetra-alkoxylorthosilicate or partially condensed oligomer thereof. For example, the intumescent coating composition may comprise 0 to 10wt% of a tetra-alkoxylorthosilicate or partially condensed oligomer thereof. Alternatively, the coating composition may comprise no further a tetra-alkoxylorthosilicate or partially condensed oligomer thereof. The alkoxy groups of the tetra-alkoxylorthosilicate or partially condensed oligomer thereof may be independently selected from C₁-C₂₀ alkoxy groups, such as C₁-C₆ alkoxy groups. Tetra-alkoxyorthosilicates have very limited compatibility with organic polymers and will phase separate when mixed therewith. Nevertheless, it has been found that the it is possible to add a small amount of tetra-alkoxyorthosilicates to the coating composition of the present invention containing the silicate-modified epoxy resin in order to tweak the fire performance and char properties of the coating, and the coating composition would still have good storage stability (in contrast, compositions comprising non-modified silicate epoxy resins and a further metal alkoxide are expected to suffer from problems with stability).

As an example, the intumescent coating composition of the present invention may comprise
(a) 5.0-40.0 weight% of the reaction product of a tetra-alkoxylorthosilicate or partially condensed oligomer thereof and an epoxy resin containing hydroxyl groups, wherein the alkoxy groups are independently selected from C₁-C₂₀ alkoxy groups
(b) 5.0-70.0 weight% of the spumific, and
(c) 0.5 to 10.0 weight% of the metal/metalloid oxide and/or hydroxide,
wherein weight % is calculated on the total weight of the non-volatile components in the coating composition.

Another embodiment of the present invention is a method of protecting structures from fire or heat, by coating a structure with the intumescent coating composition as described herein and allowing the coating composition to harden to form a coating.

Another embodiment of the present invention is a substrate comprising a coating layer formed by applying the intumescent coating composition described herein on the substrate's surface.

### Detailed Description

### The Silicate Modified Epoxy Resin

The coating composition of the present invention comprises the reaction product of a tetra-alkoxylorthosilicate or partially condensed oligomer thereof and an epoxy resin containing hydroxyl groups, wherein the alkoxy groups are independently selected from C₁-C₂₀ alkoxy groups.

Preferably, the alkoxy groups on the tetra-alkoxylorthosilicate or partially condensed oligomer thereof are independently selected from C₁-C₆ alkoxy groups. This reaction product is referred to in this specification as "a silicate modifed epoxy resin".

Silicate-modified epoxy resins are known form EP 1 114 834 and WO 2009/019296. These patent applications disclose compositions comprising an alkoxy-containing silicon-modified epoxy resin obtainable by dealcoholisation condensation of an epoxy resin and a hydrolysable alkoxysilane. WO 2009/019296 discloses a coating composition comprising the reaction product of a tetra-alkoxyorthosilicate or a partially condensed oligomer thereof and an epoxy resin containing hydroxyl groups, said coating composition having a solids content of at least 70 vol% and/or a volatile organic content (VOC) not exceeding 250 g/l. However neither document teaches or suggests that the silicate-modified epoxy resins could be used in a coating composition for providing passive fire protection. Further neither teaches or suggests intumescent coating compositions comprising silicate modified epoxy resin in combination, one or more spumifics and one or more metal oxides/hydroxides. In particular, there is no suggestion that the silicate-modified epoxys would be suitable for use in an intumescent coating composition, let alone that such compositions would provide superior fire performance and char hardness compared to non-modified epoxys. In addition, they fail to teach or suggest that the addition of a metal oxide or a metal hydroxide would have such a dramatic effect in improving fire performance of the coating with no loss in char strength. The method for preparing such a silicate modified is provided in WO 2009/019296. The reaction product is obtained by reacting the (partially hydrolysed) tetra-alkoxyorthosilicate and the epoxy resin under increased temperature and in the presence of a catalyst.

The reaction product of the (partially condensed) tetra-alkoxyorthosilicate and the epoxy resin can have such a low viscosity that an additional solvent is not even required.

The tetra-alkoxyorthosilicate and the partially condensed oligomers thereof that can be used to prepare the silicate-modified epoxy resin are represented by the formula:

R-O-[-Si(OR)₂-O-]ₙ-R

wherein each R is independently selected from alkyl and aryl groups having up to 6 carbon atoms and -Si(OR)₃ groups, and n=1-20.

For example, n may be 1-6. In a preferred embodiment, R is selected from methyl, ethyl, propyl, isopropyl, and butyl; more preferably, R is ethyl.

Examples of suitable tetra-alkoxyorthosilicates are tetra-methoxyorthosilicate, tetra-ethoxyorthosilicate, tetra-propoxyorthosilicate, tetra-isopropoxyorthosilicate, tetra-butoxyorthosilicate, and partially polymerised/oligomerised forms thereof. A most preferred tetra-alkoxyorthosilicate is a partially oligomerised tetra-ethoxyorthosilicate such as the commercially available tetra-ethoxyorthosilicates TES40 (ex Wacker) and Dynasil 40 (ex Degussa).

The epoxy resin containing hydroxyl groups that can be used in the present invention can be an aromatic or an aliphatic epoxy resin. Preferably the epoxy resin containing hydroxyl group comprises (i) one or more aromatic epoxy resins and/or (ii)one or more aliphatic epoxy resins.

Examples of aliphatic epoxy resins that contain hydroxyl groups include hydrogenated bisphenol A epoxy resins and polyglycidylethers of polyhydric alcohols such as trimethylolpropane triglycidyl ether, pentaerythritol tetraglycidyl ether, dipentaerythritol tetraglycidyl ether, butanediol diglycidyl ether, and hexanediol diglycidyl ether.

Examples of aromatic epoxy resins that contain hydroxyl groups are bisphenol epoxy resins (e.g. Bisphenol A and Bisphenol F epoxy resins) and novolac resins. Bisphenol epoxy resins can be obtained by the reaction between bisphenols and haloepoxides such as epichlorohydrin or β-methylepichlorohydrin. Suitable bisphenols can be obtained by the reaction between phenol or 2,6-dihalophenol and aldehydes or ketones such as formaldehyde, acetaldehyde, acetone, acetophenone, cyclohexanone, or benzophenone, by oxidation of dihydroxyphenylsulfide with a peracid, and by etherification of one or more hydroquinones.

The epoxy resin may have been partially reacted with a secondary amine prior to its reaction with the tetra-alkoxyorthosilicate.

The epoxy equivalent of the epoxy resins containing hydroxyl groups is preferably about 180 to about 5,000 g/eq, more preferably 180 to 1,000 g/eq. With an epoxy equivalent below 180 g/eq, the number of hydroxyl groups able to react with the tetra-alkoxyorthosilicate will be too small to give sufficient bonding between the epoxy resin and the tetra-alkoxyorthosilicate. With an epoxy equivalent higher than 5,000 g/eq, the number of hydroxyl groups will be so high that the condensation will be difficult to control and fast gelation may occur.

The silicate-modified epoxy resin is obtainable by dealcoholisation condensation of the (partially hydrolysed) tetra-alkoxyorthosilicate and the epoxy resin containing hydroxyl groups. During the dealcoholisation condensation, part or all of the hydroxyl groups of the epoxy resin react with (partially hydrolysed) tetra-alkoxyorthosilicate.

The weight ratio of epoxy resin to tetra-alkoxyorthosilicate is preferably in the range of 1:10 to 10:1, more preferably 1:1 to 5:1.

Preferably, the ratio of alkoxy groups of the (partially hydrolysed) tetra-alkoxyorthosilicate to hydroxyl groups of the epoxy resin lies in the range of 2:1 to 100:1, more preferably in the range of 3:1 to 50:1, and most preferably in the range of 4:1 to 12:1. A stoichiometric ratio is undesired, because with an epoxy resin having on average more than one hydroxyl group per molecule that could result in the product forming an intractable gel. And although it is possible to use an excess of hydroxyl groups, the resulting product would have high viscosity and would not exhibit fast drying.

The dealcoholisation condensation reaction can be performed by heating, in the presence of a catalyst, a mixture of the epoxy resin and the (partially hydrolysed) tetra-alkoxyorthosilicate. Upon heating in the presence of a suitable catalyst, some reaction between the hydroxyl groups of the epoxy resin and the orthosilicate takes place, as evidenced by changes in the ¹H NMR spectrum of the epoxy resin. As the reaction proceeds, the miscibility of the two components improves to such an extent that a single phase homogenous mixture results.

The reaction temperature preferably ranges from 50°C to 130°C, more preferably from 70 to 110°C. The reaction is preferably conducted for about 1 to about 15 hours and under substantially anhydrous conditions in order to prevent polycondensation reactions of the tetra-alkoxyorthosilicate.

Suitable catalysts for this dealcoholisation condensation reaction are conventionally known catalysts which do not cause ring opening of an epoxy ring. Examples of such catalysts are metals like lithium, sodium, potassium, rubidium, caesium, magnesium, calcium, barium, strontium, zinc, aluminium, titanium, cobalt, germanium, tin, lead, antimony, arsenic, cerium, boron, cadmium, and manganese, their oxides, organic acid salts, halides, or alkoxides. Organotitanium and organotin compounds are preferred catalysts. Even more preferred are dibutyltin dilaurate, and tetra-alkyl titanium compounds.

Base catalysts, such as amines, should however be avoided, because they might directly react with the epoxy groups on the epoxy resin or promote unwanted homopolymerisation reactions of the epoxy groups.

The resulting silicate-modified epoxy resin may contain some unreacted epoxy resin and/or unreacted tetra-alkoxyorthosilicate. The unreacted tetra-alkoxyorthosilicate can be converted to silica by hydrolysis and condensation. To promote the hydrolysis and condensation, a small amount of water may be added to the silicate-modified epoxy resin when used.

### The one or more Spumifics ("blowing agents")

The intumescent coating composition comprises one or more spumifics.

A spumific means an ingredient which is capable of reacting with the film-forming resin and/or char forming adjunct when exposed to heat to produce a gas, or sublimes and/or decomposes when exposed to heat. By exposure to heat, we typically mean exposure to temperatures of around 150°C and higher (e.g. 250°C), usually in a fire. The gas produced (usually ammonia, carbon dioxide and water) causes the coating to foam up and form a carbonaceous char foam.

It is desirable that the spumific(s) gives off gas at a temperature at which the organic polymer is soft but which is below the temperature at which the char is formed. In this way, the char which is formed is expanded and is a better insulator.

Spumifics are often amine-functional. Examples of common amine-functional spumifics known in the art include urea (CO(NH₂)₂), dicyandiamide (NC-NH-C(NH)NH₂), melamine and derivatives thereof.

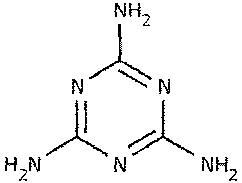

### The structure of melamine:

Melamine derivatives may be, for example, a salt of melamine (e.g. melamine cyanurate) or comprise the same structure as shown above except at least one of the hydrogens on the amino groups attached to the aromatic ring is substituted with an optionally substituted alkyl, alkenyl or aryl group. Melamine derivatives include for example, melamine cyanurate, melamine (mono)phosphate, di-melamine phosphate, melamine bi-phosphate, melamine polyphosphate, melamine pyrophosphate, Melam (1,3,5-triazine-2,4,6-triamine-n-(4,6-diamino-1,3,5-triazine-2-yl), Melem(-2,5,8-triamino 1,3,4,6,7,9,9b - Heptaazaphenalene), Melon (poly8-amino-1,3,4,6,7,9,9b-Heptaazaphenalene-2,5-diyl)imino, methylolated melamine, hexamethoxymethyl melaime.

Examples of urea derivatives are also known in the art and include, for example, N-alkylureas such as methyl urea, N,N'-dialkylureas such as dimethylurea, and N,N,N'-trialkylureas such as timethylurea, guanylurea, formamide amineo urea, guanylurea phosphate, 1,3-diamino urea, biurea and the like.

The foregoing materials release nitrogen gas when they decompose upon exposure to heat.

Other examples of spumifics are expandable graphite, tris(2-hydroxyethyl)isocyanurate ("THEIC"), sulfamic acid, boric acid and borate salts such as sodium borate and tungstanate salts such as sodium tungstanate and derivatives thereof.

The one or more spumific(s) may also comprise a source of phosphoric acid and/or a source of sulphonic acid. A "source of phosphoric acid" means is one or more components(s) that produces phosphoric acid upon exposure to heat. A "source of sulphonic acid" means is one or more components(s) that produces sulphonic acid upon exposure to heat.

Examples of such sources include sodium, potassium or ammonium salts of phosphoric or sulphonic acid, e.g. ammonium polyphosphate (APP) monoammonium phosphate, diammonium phosphate, potassium phosphate (such as potassium tripolyphosphate), sodium phosphate, para-toluene sulphonic,acid, ammonium sulphate, potassium sulphate and sodium sulphate. A preferred source of phosphoric acid is ammonium polyphosphate (APP). Ammonium polyphosphate is commercially obtainable as Exolit AP422 ™ from Clariant. A preferred source of sulphonic acid is para-toluene sulphonic acid.

Preferably, the spumific comprises ammonium polyphosphate and/or a melamine or derivatives thereof. Most preferably, the spumific comprises ammonium polyphosphate and/or a melamine or derivatives thereof.

The spumific is preferably present in the coating composition according to the present invention in an amount of 1.0 to 30.0 weight %, more preferably 5.0 to 20.0 weight %, and most preferably 7.0 to 15.0 weight % (wherein weight % is calculated on the total weight of the non-volatile components in the coating composition).

### The one or more metal oxides and hydroxides

The coating composition comprises one or more metal oxides and/or hydroxides.

The metal of the metal oxides and metal hydroxides may be a transition metal, alkali metal, alkaline earth metal or a metalloid.

Metal oxides are compounds in which the metal atoms are bonded to oxygen. Metal oxides comprise metal-oxygen bonds (M-O bonds). Simple metal oxides have only one type of metal ion, which bonds to an oxide ion (O²⁻) in proportion to balance the charges on the metal/metalloid ion. For example, the magnesium ion Mg²⁺, the aluminium ion Al³⁺ and the silicon ion Si⁴⁺ combine with the Oxide ion O²⁻ ion to form MgO (Periclase), Al₂O₃ (Corundum) and SiO₂ (Silica).

Metal hydroxides comprise metal-hydroxy bonds (M-OH bonds). Metal hydroxides may also optionally comprise metal-oxygen bonds (M-O bonds). Simple metal hydroxides contain one type of metal ion which is bonded to a hydroxide ion (OH⁻) and optionally also an oxide ion (O²⁻), in proportion to balance the charges on the metal ion.

Preferably, the metal of the one or more metal oxides and hydroxides is independently selected from Al, Ti, Mg, Zn, Zr, Na, K and Si. Most suitably, the metal is Al, Zn, and/or Ti.

Other metal oxides comprise more than one type of metal ion, examples being MgAl₂O₄ (Spinel) and FeTiO₃ (Ilmenite).

For example, the one or more metal oxides/hydroxides may be is independently selected from: Al₂O₃, Al(OH)₃, TiO₂, ZnO, SiO₂, aluminum silicate, kaolin and china clay. A particularly suitable metal hydroxide for use in the present invention is Al(OH)₃. A particularly suitable metal oxide is Al₂O₃.

The metal oxides and metal hydroxides may be solid. By solid we mean solid in accordance with ASTM D 4359-90.

### Use and Application

The intumescent coating composition as described and claimed herein can be used to protect structures from fire.

The present invention further relates to a substrate comprising a coating layer formed by applying the intumescent compositions described herein on the substrate's surface.

The dry film thickness of the layer of intumescent coating is typically between 100µm and 8mm, preferably 200µm and 4mm, for cellulosic fire applications. For hydrocarbon fire applications the dry film thickness layer of intumescent coating is typically between 500 µm to 50mm, preferably 1mm to 25mm. The dry film thickness may be measured using an Elcometer 355 Coating Thickness Gauge.

The composition according to the invention may be applied as a topcoat, directly to the substrate, or as an intermediate coat (between the top coat and a primer). Hence, when applying the composition according to the present invention, there may be no need for a separate protective layer to protect the substrate, for example, from corrosion. And since the coating of the invention may also have good protective properties and aesthetic appearance, it could be used without a separate topcoat to improve appearance and/or protect the intumescent layer against the effects of atmospheric weathering.

The coating composition is typically a liquid when it is applied. The coating composition is typically applied at ambient temperatures, although may be heated upon application (for example up to 60°C, to reduce it's viscosity). Liquid coating compositions may be applied by conventional methods, for example by airless spray, by pouring (used in molds), brushing or troweling.

Typically, the viscosity of the coating composition is suitable to allow effective atomisation and droplet formation under the high shear conditions associated with plural component airless spray application techniques at ambient temperature. The coating composition however may be preheated up to temperatures of 50 or 60°C in the airless spray equipment to reduce the viscosity of the coating composition.

The intumescent coating composition may have the form of a 1-pack or a 2-pack composition.

A 1-pack composition requires the epoxy resin to have been pre-reacted with a secondary amine prior to its reaction with the (partially hydrolysed) tetra-alkoxyorthosilicate and is moisture curable. Hence, this composition should be substantially free of moisture.

A 2-pack composition will contain at least one curing agent in a separate pack. Hence, pack 1 will contain the silicate-modified epoxy resin, pack 2 at least one epoxy-reactive curing agent. Pack 1 is preferably free of bases or other compounds that can react with the epoxy functionalities of the silicate-modified epoxy resin. It is particularly preferred that pack 1 is free of amines. Furthermore, pack 1 should be substantially free of moisture.

"Substantially free of moisture" in this specification means containing less than 1.0 wt%, more preferably less than 0.5 wt%, and most preferably less than 0.1 wt% of water.

The at least one epoxy-reactive curing agent that is present in the 2-pack coating composition can be any curing agent commonly known as a curing agent for epoxy resins.

Optionally the coating composition comprises 2 or more curing agents.

Examples are phenol resin curing agents, polyamine curing agents, polyamidoamine curing agents, polythiol curing agents, polyanhydride curing agents, and polycarboxylic acid curing agents, with amine curing agents (polyamine curing agents) being preferred.

Optionally, the curing agent may comprise an amino-functional organosiloxane that is capable of reacting with both epoxy groups and alkoxysilicate groups.

Examples of phenol resin curing agents are phenol novolac resin, bisphenol novolac resin, and poly p-vinylphenol.

Examples of polyamine curing agents are diethylene triamine, triethylene tetramine, tetraethylene pentamine, dicyandiamide, polyamide-amine, polyamide resin, ketimine compounds, isophorone diamine, m-xylene diamine, m-phenylene diamine, 1,3-bis(aminomethyl)cyclohexane, N-aminoethyl piperazine, 4,4'-diaminodiphenyl methane, 4,4'-diamino-3,3'-diethyl-diphenyl methane, diaminodiphenyl sulfone, and adducts of any of these amines. Such adducts can be prepared by reaction of the amine with a suitably reactive compound such as an epoxy resin. This will reduce the free amine content of the curing agent, making it more suitable for use under conditions of low temperature and/or high humidity.

Examples of polycarboxylic acid curing agents include phthalic anhydride, tetrahydrophthalic anhydride, methyltetrahydrophthalic anhydride, 3,6-endomethylenetetrahydrophthalic anhydride, hexachloroendomethylenetetrahydrophthalic anhydride, and methyl-3,6-endomethylenetetrahydrophthalic anhydride.

The amount of curing agent present in the 2-pack coating composition is preferably such that the equivalent ratio of the functional groups having active hydrogen in the curing agent to the epoxy groups of the silicate-modified epoxy resin is between about 0.2 and 2.

For example, the curing agent(s) (e.g. the amine functional curing agent(s)) may be present in an amount of 1.0 to 20.0 weight%, wherein weight % is calculated on the total weight of the non-volatile components in the coating composition.

In addition, the 2-pack coating composition may contain an accelerator for accelerating the curing reaction. Examples of suitable accelerators are tertiary amines like 1,8-diaza-bicyclo[5.4.0]undec-7-ene, triethylene diamine, benzyldimethylamine, triethanolamine, dimethylaminoethanol, and tris-(dimethylaminomethyl)phenol; imidazoles like 2-methylimidazole, 2-phenylimidazole, 2-phenyl-4-methylimidazole, and 2-heptadecylimidazole; organic phosphines like tributyl phosphine, methyldiphenyl phosphine, triphenyl phosphine, diphenyl phosphine, and phenyl phosphine; nonyl phenol; salicylic acid; diazabycyclo octane; calcium nitrate.

The accelerator is preferably used in an amount of 0.1 to 5 parts by weight relative to 100 parts by weight of the silicate-modified epoxy resin.

The accelerator can be present in pack 1 (containing the silicate-modified epoxy resin) and/or pack 2 (containing the curing agent).

The coating composition according to the invention may also contain a compound which acts as a catalyst for Si-O-Si condensation. In general, the coating is capable of curing under ambient temperature and humidity conditions to a tack-free coating in 2 to 20 hours even without such a catalyst, but a catalyst may be preferred to give a faster cure.

One example of a catalyst for Si-O-Si condensation is an alkoxytitanium compound, for example a titanium chelate compound such as a titanium bis(acetylacetonate) dialkoxide, e.g., titanium bis(acetylacetonate) diisopropoxide, a titanium bis(acetoacetate) dialkoxide, e.g., titanium bis(ethyl-acetoacetate) diisopropoxide, or an alkanolamine titanate, e.g., titanium bis(triethanolamine) diisopropoxide, or an alkoxytitanium compound which is not a chelate such as tetra(isopropyl) titanate or tetrabutyl titanate. Such titanium compounds containing alkoxy groups bonded to the titanium may not act as catalysts alone, since the titanium alkoxide group is hydrolysable and the catalyst may become bound to the cured composition by Si-O-Ti linkages. The presence of such titanium moieties in the cured composition may be advantageous in giving even higher heat stability. The titanium compound can for example be used at 0.1 to 5% by weight of the binder. Corresponding alkoxide compounds of zirconium or aluminium are also useful as catalysts.

An alternative catalyst for Si-O-Si condensation is a nitrate of a polyvalent metal ion such as calcium nitrate, magnesium nitrate, aluminium nitrate, zinc nitrate, or strontium nitrate. Calcium nitrate is an effective catalyst for curing a silicate by Si-O-Si condensation when the composition also includes an organic amine. The calcium nitrate is preferably used in its tetrahydrate form, but other hydrated forms can be used. The level of calcium nitrate catalyst required generally is not more than 3% by weight of the binder, for example 0.05 to 3% by weight. Coatings cured using calcium nitrate catalyst are especially resistant to yellowing on exposure to sunlight.

Another example of a suitable catalyst is an organotin compound, for example a dialkyltin dicarboxylate such as dibutyltin dilaurate or dibutyltin diacetate. Such an organotin catalyst can for example be used at 0.05 to 3% by weight, based on the weight of the silicate-modified epoxy resin.

Other compounds effective as catalysts in the coating compositions of the invention are organic salts, such as carboxylates, of bismuth, for example bismuth tris(neodecanoate). Organic salts and/or chelates of other metals such as zinc, aluminium, zirconium, tin, calcium, cobalt, or strontium, for example zirconium acetylacetonate, zinc acetate, zinc acetylacetonate, zinc octoate, stannous octoate, stannous oxalate, calcium acetylacetonate, calcium acetate, calcium 2-ethylhexanoate, cobalt naphthenate, calcium dodecylbenzene sulphonate, or aluminium acetate, may also be effective as catalysts.

The composition may cure and/or dry at ambient temperatures, for example - 5°C to 40 °C and if so, is suitable for application to large structures where heat-curing is impractical when the temperature is low. The composition of the invention alternatively may be cured and/or dried at elevated temperatures, for example from 40°C or 50°C up to 100°C if so desired. The hydrolysis of silicon-bonded alkoxy groups depends on the presence of moisture: in almost all climates atmospheric moisture is sufficient, but a controlled amount of moisture may need to be added to the composition when curing at sub-ambient temperature or when curing in very low humidity (desert) locations. The water is preferably packaged separately from any compound containing metal/metalloid (usually silicon)-bonded alkoxy groups. The composition according to all embodiments of the present invention preferably has a solids content of at least 50% by weight (wt%), more preferably at least 80 wt%, and most preferably at least 85 wt%, based on the total weight of the composition. The solids content is based upon a theoretical calculation of the solvent in the formulation excluding that which would be released upon curing.

The Volatile Organic Content (VOC) of the coating composition as present in a paint can (that is: prior to cure) preferably does not exceed 250 g/l and most preferably is less than 100 g/l solvent per litre of the composition. The VOC may be calculated.

The above values refer to those of the complete composition. Hence, for a composition that has the form of a 2-pack composition, they refer to the solids content and the VOC of the composition after the two packs have been combined.

The composition according to all embodiments of the present invention can be applied on various substrates. It is particularly suitable to be applied on metal substrates, more in particular steel substrates. Due to the strength of the char, the intumescent is particularly suitable for protecting structures from hydrocarbon fires, for example jet fires, i.e. high-temperature, high heat flux, high-velocity flames. Some compositions according to the present invention can thus also be applied to substrates in zones exposed to jet-fires. The intumescent coating composition is also particularly suitable for providing robust chars to protect from cellulosic pool-fires where the chars are normally weak and easily damaged. If chars are damaged their ability to protect the steel is lessened.

### Other Optional Components

The coating composition may further comprise a char-forming adjunct as an intumescent ingredient. However, if any of the other ingredients such as the organic polymer or the spumific itself already acts as char-forming adjunct (such as ammonium polyphosphate), an additional char-forming adjunct may not be required.

A char-forming adjunct promotes the formation of a char when the composition is exposed to fire. Lewis acids are believed to perform this function. Preferably, phosphorus compounds such as ammonium phosphates, phosphonatosilanes, more preferably ammonium polyphosphate, or phosphoric acid are used. It is also possible to use other char-forming adjuncts instead of or in addition to phosphorus containing compounds. Ammonium polyphosphate can be used optionally in conjunction with tris-(2-hydroxyethyl) isocyanurate (THEIC).

The char-forming adjunct may be present in the coating composition in an amount of 10 to 70 weight %, more preferably 25 to 60 weight %, and most preferably 40 to 60 weight % (wherein weight % is calculated on the total weight of the non volatile components in the coating composition).

The intumescent coating composition may further comprise an additional source of carbon, i.e. additional to the optional organic resin. Examples of suitable additional carbon sources are pentaerythritol, dipentaerythritol, polyvinyl alcohol, starch, cellulose powder, hydrocarbon resins, chloroparaffins, and phosphated plasticisers.

The composition of the invention may further comprise other binder polymers, solvents, pigments and thickening agents.

Examples of suitable solvents are di-methylbenzene and tri-methylbenzene.

Examples of pigments are titanium dioxide (white pigment), coloured pigments such as carbon black, one or more strengthening pigments such as fibres, e.g. ceramic fibre, glass fibre, or carbon fibre, one or more anticorrosive pigments such as wollastonite or a chromate, molybdate, phosphate or phosphonate, and/or a filler pigment such as barytes, talc or calcium carbonate.

Examples of thickening agents include fine-particle silica, bentonite clay, hydrogenated castor oil, or polyamide wax, one or more plasticisers, pigment dispersants, stabilisers, surface modifiers, flame retardants, antibacterial agents, antimoulds, low density fillers, endothermic fillers, char promoters, fluxing aids, and levelling agents.

Fibres may be present in the composition. However their presence is not required to obtain a hard char. One embodiment of the present invention is therefore a intumescent coating composition that does not contain fibres or contains less than 3 weight % of fibres.

In addition, the composition may contain one or more additional organic resins/polymers and additives, which may or may not contain functional groups. A suitable additives include, for example acrylate monomers comprising one or more acrylate functional groups. An exemplary example includes trialkanolalkyltriacrylates, such as trimethylol propane triacrylate.

Examples of other binder polymers include, epoxy resins, hydrocarbon polyol resins, acrylic resins, alkyd resins and/or acrylates.

### Examples

The invention will be elucidated with reference to the following examples. These are intended to illustrate the invention but are not to be construed as limiting in any manner the scope thereof.

### Example 1

In this Example, a silicate-modified epoxy resin was prepared by reacting a blend of aromatic Bisphenol A-type epoxy resins containing hydroxyl groups with a partially condensed tetra-alkoxyorthosilicate, in the presence of a catalyst.

A partially condensed tetra-alkoxyorthosilicate (TES40) (119.88 g), tetra-n-butyl titanate (0.60 g), and two aromatic Bisphenol A epoxy resins containing hydroxyl groups - DER 331 (376.4g/62.8 wt%; a solvent-free liquid resin) and Epikote 836-X-80 (103.1g/17.2 wt%; a semi-solid resin containing 20 wt% of xylene) - were charged to a 700 ml reaction flask fitted with a stirrer, a condenser, a thermocouple, and a N₂ sparge. The reaction flask was purged with nitrogen for 15 minutes and the reactants were subsequently heated to 100°C. The reaction temperature was maintained at 100°C for 3 hours before the reaction product was cooled to 40°C and discharged.

It was observed that the reactants were initially incompatible with each other. However, after 30 minutes at 100°C, the vessel contained a clear, homogenous, and mobile liquid.

### Example 2 (coating composition according to the present invention)

In this example, a coating composition according to the present invention was prepared using the silicate modified epoxy resin of Example 1.

The intumescent coating composition was prepared by mixing together all the components listed in Table 1 below. A polyamide curing agent (40.2g) was then added and the intumescent coating composition was then applied to a grit blasted primed steel panel and allowed to cure for 12 hrs.

**Table 1**

| | **Weight (grams)** |
|---|---|
| Silicate modified epoxy resin of Ex 1 | 132.3 |
| Aluminium Hydroxide | 4.9 |
| Ammonium Polyphosphate | 255.4 |
| Melamine | 52.9 |

### Example 3 (comparative-coating composition comprising non modified epoxy resin)

In this example, a coating composition was prepared using a non-silicate modified epoxy resin (DER 331).

The intumescent coating composition was prepared by mixing together all the components listed in Table 2 below. A polyamide curing agent (54.6g) was then added and the intumescent coating composition was then applied to a grit blasted primed steel panel and allowed to cure for 12 hrs.

**Table 2**

| | **Weight (grams)** |
|---|---|
| Epoxy resins DER 331 and Epikote 836-X-80 | 122.6 |
| Aluminium Hydroxide | 5.0 |
| Ammonium Polyphosphate | 251.5 |
| Melamine | 52.12 |

### Example 4 (comparative - coating composition not comprising a metal oxide or metal hydroxide)

In this example, a coating composition was prepared using the silicate modified epoxy resin of Example 1, but does not comprise a metal oxide or a metal hydroxide.

The intumescent coating composition was prepared by mixing together all the components listed in Table 3 below. A polyamide curing agent (41.8g) was then added and the intumescent coating composition was then applied to a grit blasted primed steel panel and allowed to cure for 12 hrs.

**Table 3**

| | **Weight (grams)** |
|---|---|
| Silicate modified epoxy resin of Example 1 | 137.6 |
| Ammonium Polyphosphate | 265.6 |
| Melamine | 55.1 |

### Furnace (fire Performance) testing of Coating compositions of Examples 2 to 4 (Cellulosic heating curve)

Five thermocouples were attached to the back of each coated steel panel of coating Examples 2 to 4. Panels were mounted vertically in a 1.5m³ furnace operated under a Hydrocarbon heating curve as described in BS476. The average thermocouple reading was calculated throughout the test and the Time to Failure recorded as the time when the average thermocouple temperature reached 500°C. The results are in Table 4.

**Table 4 - Results of Furnace testing - Hydrocarbon heating curve**

| **Composition No** | **Time to Failure (min)** |
|---|---|
| Example 2 | 75 |
| Example 3 (comparative) | 52 |
| Example 4 (comparative) | 51 |

### Char Strength testing

The strength of the char of coating of Examples 2 to 4 produced by the furnace testing were measured, after cooling to ambient, by a standard test protocol where each is ranked from 1 (softest) to 5 (hardest) after compressing the char with a finger. The results are in Table 5.

**Table 5 - Results of char strength testing**

| **Composition No** | **Char strength ranking** |
|---|---|
| Example 2 | 3 - notably harder and good cohesion |
| Example 3 - comparative | 1 - flaky and easily fell apart |
| Example 4 - comparative | 1 - flaky and easily fell apart |

### Discussion of Results

Commercial epoxy-based intumescent compositions contain additives and fillers for optimizing the fire performance and char strength of a coating.

Such fully-optimized commercial epoxy-based intumescent compositions containing fibres and additives are deemed to have good fire performance if they achieve a time-to-failure of at least 70 minutes in the above-noted fire performance test, and good char strength if they achieve a score of 3 or more in the char-strength test.

If the same commercial epoxy-based intumescent compositions have been formulated by removing the fibres and/or additives, they would be expected to achieve a time-to-failure of about 50 minutes in the fire performance test, and only a score of 1 in the char-strength test.

None of Examples 2-4 contain any performance optimizing fillers and additives.

The results in Table 4 show that the fire performance of coatings of Examples 3 and 4 (comparative) which do not contain fibres or additives is as good as a commercial epoxy-based intumescent composition not containing fibres/additives. Surprisingly, the coating of Example 2 (in accordance with the present invention) which does not contain fibres or additives, has fire performance which is even better than a fully-optimized commercial epoxy-based intumescent coating containing fibres/additives.

The results in Table 5 show that the char strength of coatings of Examples 3 and 4 (comparative) which do not contain fibres or additives, is the same as a commercial epoxy-based intumescent composition which also does not contain fibres/additives. Surprisingly coating of Example 2 (in accordance with the present invention) which does not contain fibres or additives, has a char strength which is on par with a fully-optimized commercial epoxy-based intumescent coating containing fibres/additives.

## Claims

1. An intumescent coating composition comprising
(a) a reaction product of a tetra-alkoxylorthosilicate or partially condensed oligomer thereof and an epoxy resin containing hydroxyl groups, wherein the alkoxy groups are independently selected from C₁-C₂₀ alkoxy groups,
(b) one or more spumifics, and
(c) one or more metal oxides and/or hydroxides.

2. The intumescent coating composition of any preceding claim wherein the total weight % of the one or more metal oxides and hydroxides (c) in the coating composition does not exceed 10.0 weight %, wherein weight % is calculated on the total weight of the non-volatile components in the coating composition.

3. The intumescent coating composition of any preceding claim wherein the epoxy resin containing hydroxyl group comprises (i) one or more aromatic epoxy resins and/or (ii) one or more aliphatic epoxy resins.

4. The intumescent coating composition of any preceding claim wherein the metal of the one or more metal oxides and hydroxides (c) is independently selected from Al, Ti, Mg, Zn, Zr, Na, K and Si.

5. The intumescent coating composition of any preceding claim wherein the one or more metal oxides and/or hydroxides is independently selected from: Al₂O₃, Al(OH)₃, TiO₂, ZnO, SiO₂, aluminum silicate, kaolin and china clay.

6. The intumescent coating composition of any preceding claim wherein the alkoxy groups on the tetra-alkoxylorthosilicate or partially condensed oligomer thereof used to prepare the reaction product (a) are independently selected from C₁-C₆ alkoxy groups.

7. The intumescent coating composition of any preceding claim wherein the spumific comprises ammonium polyphosphate and/or a melamine or derivatives thereof.

8. The intumescent coating composition of any preceding claim comprising
(a) 5.0-40.0 weight% of the reaction product of a tetra-alkoxylorthosilicate or partially condensed oligomer thereof and an epoxy resin containing hydroxyl groups, wherein the alkoxy groups are independently selected from C₁-C₂₀ alkoxy groups,
(b) 5.0-70.0 weight% of the spumific, and
(c) 0.5 to 10.0 weight% of the metal/metalloid oxide and/or hydroxide,
wherein weight % is calculated on the total weight of the non-volatile components in the coating composition.

9. The intumescent coating composition of any preceding claim further comprising a tetra-alkoxylorthosilicate or partially condensed oligomer thereof, wherein weight % is calculated on the total weight of the non-volatile components in the coating composition.

10. The intumescent coating composition of claim 9, wherein the tetra-alkoxylorthosilicate or partially condensed oligomer thereof is present in an amount of up to 10.0 wt%, wherein weight % is calculated on the total weight of the non-volatile components in the coating composition.

11. The intumescent coating composition of any preceding claim further comprising one or more curing agents.

12. The intumescent coating composition of claim 11 wherein the curing agent(s) are present in an amount of 1.0 to 20.0 weight%, wherein weight % is calculated on the total weight of the non-volatile components in the coating composition.

13. Method of protecting structures from fire or heat, by coating a structure with the intumescent coating composition as defined in any of Claims 1-12 and allowing the coating composition to harden to form a coating.

14. Substrate comprising a coating layer formed by applying the intumescent coating composition according to any one of claims 1-12 on the substrate's surface.

## Patentansprüche

1. Intumeszierende Beschichtungszusammensetzung, umfassend
(a) ein Reaktionsprodukt aus einem Tetraalkoxylorthosilicat oder einem teilweise kondensierten Oligomer davon, und einem Expoxidharz, enthaltend Hydroxylgruppen, wobei die Alkoxygruppen unabhängig ausgewählt sind aus C₁-C₂₀-Alkoxygruppen,
(b) einen oder mehrere Schaumbildner, und
(c) ein oder mehrere Metalloxide und/oder -hydroxide.

2. Intumeszierende Beschichtungszusammensetzung nach einem der vorhergehenden Ansprüche, wobei die Gesamt-Gew.% des einen oder der mehreren Metalloxide und -hydroxide (c) in der Beschichtungszusammensetzung 10,0 Gew.% nicht überschreiten, wobei die Gew.% nach dem Gesamtgewicht der nichtflüchtigen Komponenten in der Beschichtungszusammensetzung berechnet werden.

3. Intumeszierende Beschichtungszusammensetzung nach einem der vorhergehenden Ansprüche, wobei das Epoxydharz, enthaltend Hydroxylgruppe, (i) ein oder mehrere aromatische Epoxidharz(e) und/oder (ii) einen oder mehrere aliphatische Epoxidharz(e) umfasst.

4. Intumeszierende Beschichtungszusammensetzung nach einem der vorhergehenden Ansprüche, wobei das Metall des einen oder der mehreren Metalloxide und -hydroxide (c) unabhängig ausgewählt ist aus Al, Ti, Mg, Zn, Zr, Na, K und Si.

5. Intumeszierende Beschichtungszusammensetzung nach einem der vorhergehenden Ansprüche, wobei das eine oder die mehreren Metalloxide und/oder -hydroxide unabhängig ausgewählt sind aus: Al₂O₃, Al(OH)₃, TiO₂, ZnO, SiO₂, Aluminiumsilicat, Kaolin und Porzellanerde.

6. Intumeszierende Beschichtungszusammensetzung nach einem der vorhergehenden Ansprüche, wobei die Alkoxygruppen an dem Tetraalkoxylorthosilikat oder teilweise kondensierten Oligomer davon, die zur Herstellung des Reaktionsprodukts (a) verwendet wurden, unabhängig ausgewählt sind aus C₁-C₆ -Alkoxygruppen.

7. Intumeszierende Beschichtungszusammensetzung nach einem der vorhergehenden Ansprüche, wobei der Schaumbildner Ammoniumpolyphosphat und/oder ein Melamin oder Derivate davon umfasst.

8. Intumeszierende Beschichtungszusammensetzung nach einem der vorhergehenden Ansprüche, umfassend
(a) 5,0-40,0 Gew.% des Reaktionsprodukts eines Tetraalkoxylorthosilicats oder eines teilweise kondensierten Oligomers davon, und eines Expoxidharzes, enthaltend Hydroxylgruppen, wobei die Alkoxygruppen unabhängig ausgewählt sind aus C₁-C₂₀-Alkoxygruppen,
(b) 5,0-70,0 Gew.% des Schaumbildners und
(c) 0,5 bis 10,0 Gew.% des Metall-/Halbmetalloxids und/oder -hydroxids, wobei die Gew.% nach dem Gesamtgewicht der nichtflüchtigen Komponenten in der Beschichtungszusammensetzung berechnet werden.

9. Intumeszierende Beschichtungszusammensetzung nach einem der vorhergehenden Ansprüche, weiterhin umfassend ein Tetraalkoxylorthosilicat oder ein teilweise kondensiertes Oligomer davon, wobei die Gew.% nach dem Gesamtgewicht der nichtflüchtigen Komponenten in der Beschichtungszusammensetzung berechnet werden.

10. Intumeszierende Beschichtungszusammensetzung nach Anspruch 9, wobei das Tetraalkoxylorthosilicat oder das teilweise kondensierte Oligomer davon in einer Menge von bis zu 10,0 Gew.% vorhanden ist, wobei die Gew.% nach dem Gesamtgewicht der nichtflüchtigen Komponenten in der Beschichtungszusammensetzung berechnet werden.

11. Intumeszierende Beschichtungszusammensetzung nach einem der vorhergehenden Ansprüche, weiterhin umfassend einen oder mehrere Härtemittel.

12. Intumeszierende Beschichtungszusammensetzung nach Anspruch 11, wobei das (die) Härtemittel in einer Menge von 1,0 bis 20,0 Gew.% vorhanden sind, wobei die Gew.% nach dem Gesamtgewicht der nichtflüchtigen Komponenten in der Beschichtungszusammensetzung berechnet werden.

13. Verfahren zum Schutz von Strukturen vor Feuer oder Hitze durch Beschichten einer Struktur mit der intumeszierenden Beschichtungszusammensetzung nach einem der Ansprüche 1-12 und Aushärten lassen der Beschichtungszusammensetzung, um einen Überzug zu bilden.

14. Substrat, umfassend eine Deckschicht, die durch Auftragen der intumeszierenden Beschichtungszusammensetzung nach einem der Ansprüche 1-12 auf die Oberfläche des Substrats gebildet wird.

## Revendications

1. Composition de revêtement intumescent comprenant
(a) un produit de réaction d'un tétra-alcoxylorthosilicate ou d'un oligomère partiellement condensé de celui-ci et d'une résine époxyde contenant des groupes hydroxyl, où les groupes alcoxy sont indépendamment choisis parmi des groupes alcoxy en C₁ à C₂₀,
(b) un ou plusieurs agent(s) spumogène(s), et
(c) un ou plusieurs oxyde(s) et/ou hydroxyde(s) métallique(s).

2. Composition de revêtement intumescent selon l'une quelconque des revendications précédentes, dans laquelle le pourcentage en poids total du ou des plusieurs oxyde(s) et hydroxyde(s) métallique(s) (c) dans la composition de revêtement ne dépasse pas 10,0% en poids, où le pourcentage en poids est calculé par rapport au poids total des composants non volatils dans la composition de revêtement.

3. Composition de revêtement intumescent selon l'une quelconque des revendications précédentes, dans laquelle la résine époxyde contenant un groupe hydroxyle comprend (i) une ou plusieurs résine(s) époxyde(s) aromatique(s) et/ou (ii) une ou plusieurs résine(s) époxyde(s) aliphatique(s).

4. Composition de revêtement intumescent selon l'une quelconque des revendications précédentes, dans laquelle le métal du ou des plusieurs oxyde(s) et hydroxyde(s) métallique(s) (c) est indépendamment choisi parmi Al, Ti, Mg, Zn, Zr, Na, K et Si.

5. Composition de revêtement intumescent selon l'une quelconque des revendications précédentes, dans laquelle le ou les plusieurs oxyde(s) et/ou hydroxyde(s) métallique(s) est/sont choisi(s) indépendamment parmi : Al₂O₃, Al(OH)₃, TiO₂, ZnO, SiO₂, le silicate d'aluminium, le kaolin et la terre à porcelaine.

6. Composition de revêtement intumescent selon l'une quelconque des revendications précédentes, dans laquelle les groupes alcoxy sur le tétra-alcoxylorthosilicate ou l'oligomère partiellement condensé de celui-ci utilisé pour préparer le produit de réaction (a) sont indépendamment choisis parmi des groupes alcoxy en C₁ à C₆.

7. Composition de revêtement intumescent selon l'une quelconque des revendications précédentes, dans laquelle l'agent spumogène comprend du polyphosphate d'ammonium et/ou la mélamine ou des dérivés de celle-ci.

8. Composition de revêtement intumescent selon l'une quelconque des revendications précédentes comprenant
(a) 5,0 à 40,0% en poids du produit de réaction d'un tétra-alcoxylorthosilicate ou d'un oligomère partiellement condensé de celui-ci et d'une résine époxyde contenant des groupes hydroxyle, où les groupes alcoxy sont indépendamment choisis parmi des groupes alcoxy en C₁ à C₂₀,
(b) 5,0 à 70,0% en poids de l'agent spumogène, et
(c) 0,5 à 10,0% en poids de l'oxyde et/ou de l'hydroxyde métallique/de métalloïde, où le pourcentage en poids est calculé par rapport au poids total des composants non volatils dans la composition de revêtement.

9. Composition de revêtement intumescent selon l'une quelconque des revendications précédentes, comprenant en outre un tétra-alcoxylorthosilicate ou un oligomère partiellement condensé de celui-ci, où le pourcentage en poids est calculé par rapport au poids total des composants non volatils dans la composition de revêtement.

10. Composition de revêtement intumescent selon la revendication 9, dans laquelle le tétra-alcoxylorthosilicate ou un oligomère partiellement condensé de celui-ci est présent en une quantité allant jusqu'à 10,0% en poids, où le pourcentage en poids est calculé par rapport au poids total des composants non volatils dans la composition de revêtement.

11. Composition de revêtement intumescent selon l'une quelconque des revendications précédentes, comprenant en outre un ou plusieurs agent(s) de durcissement.

12. Composition de revêtement intumescent selon la revendication 11, dans laquelle le/les agent(s) de durcissement est/sont présent(s) en une quantité allant de 1,0 à 20,0% en poids, où le pourcentage en poids est calculé par rapport au poids total des composants non volatils dans la composition de revêtement.

13. Procédé de protection de structures contre le feu ou la chaleur, en revêtant une structure de la composition de revêtement intumescent telle que définie dans l'une des revendications 1 à 12 et en permettant à la composition de revêtement de durcir pour former un revêtement.

14. Substrat comprenant une couche de revêtement formée en appliquant la composition de revêtement intumescent selon l'une quelconque des revendications 1 à 12 sur la surface du substrat.
